# EUROPÄISCHE PATENTSCHRIFT

(11) **EP 3 025 068 B1**
(45) Veröffentlichungstag und Bekanntmachung des Hinweises auf die Patenterteilung: **16.01.2019**
(21) Anmeldenummer: 14742506.0
(22) Anmeldetag: 23.07.2014
(51) Int. Cl.: F16F 7/12

(54) **ENERGIEVERZEHRVORRICHTUNG**
ENERGY ABSORPTION DEVICE
DISPOSITIF D'ABSORPTION D'ÉNERGIE

(30) Priorität: 24.07.2013 DE 102013214411
(43) Veröffentlichungstag der Anmeldung: 01.06.2016
(73) Patentinhaber: Voith Patent GmbH, 89522 Heidenheim (DE)
(72) Erfinder: ENDE, Sascha, 37632 Eschershausen (DE); ROMUND, Mathias, 21710 Engelschoff (DE)
(86) Internationale Anmeldenummer: PCT/EP2014/065828
(87) Internationale Veröffentlichungsnummer: WO 2015/011193

(56) Entgegenhaltungen:
- EP-A1- 1 731 298
- EP-A1- 2 192 322
- EP-A2- 0 719 635
- US-A- 4 749 613
- US-A1- 2009 277 992
- US-A1- 2010 040 815
- US-B1- 6 601 886

## Beschreibung

Die Erfindung betrifft eine Energieverzehrvorrichtung, im Einzelnen mit den Merkmalen aus dem Oberbegriff von Anspruch 1. sowie ein Verfahren zum Herstellen eines Energieverzehrelements mit den Merkmalen des Anspruchs 13.

Energieverzehrvorrichtungen, insbesondere Energieverzehrelemente von Energieverzehrvorrichtungen, die teilweise oder vollständig aus Faserverbundstrukturen bestehen, sind in einer Vielzahl von Ausführungen aus dem Stand der Technik vorbekannt. Auch Faserverbundstrukturen sind in einer Vielzahl von Ausführungen aus dem Stand der Technik für unterschiedliche Einsatzzwecke vorbekannt. Ein wesentlicher Anwendungsbereich sind Energieverzehrstrukturen, angeordnet in oder an Fahrzeugen, welche geeignet sind, einen Teil von in diese eingeleiteter Stoßenergie durch nicht duktile Zerstörung abzubauen.

So offenbart beispielsweise die Druckschrift WO 2010/029188 Ausführungen von Fahrzeugkopfstrukturen für schienengebundene Fahrzeuge, gebildet aus ersten, eine Tragfunktion übernehmenden Strukturelementen und zweiten Strukturelementen mit Energieverzehr, wobei die Strukturelemente vorrangig aus einem Faserverbundwerkstoff ausgebildet sind. Die Aufgabe der zweiten Strukturelemente mit Energieverzehr besteht darin, die in einem Crashfall aufgrund einer Stoßkraftübertragung anfallende und in den Fahrzeugkopf eingeleitete Stoßenergie zumindest teilweise zu absorbieren und abzubauen, um die aus den ersten Strukturelementen ausgebildete selbsttragende Struktur nicht in Mitleidenschaft zu ziehen. Dazu sind die zweiten Strukturelemente derart ausgelegt, die eingeleitete Stoßenergie zumindest teilweise durch nicht-duktile Zerstörung des Faserverbundwerkstoffes der zweiten Strukturelemente abzubauen.

Eine Ausführung einer Energieverzehrvorrichtung in Form einer Stoßsicherung ist aus der EP 2 295 305 B1 vorbekannt, umfassend ein Energieverzehrelement und ein derart mit dem Energieverzehrelement zusammenwirkendes Gegenelement, wobei sich bei Überschreiten einer kritischen, in die Energieverzehrvorrichtung eingeleiteten Stoßkraft das Gegenelement und das Energieverzehrelement unter gleichzeitigem Verzehr von zumindest einem Teil der in die Energieverzehrvorrichtung eingeleiteten Stoßenergie relativ zueinander aufeinander zu bewegen, wobei das Energieverzehrelement mindestens einen Energieverzehrbereich aus Faserverbundwerkstoff aufweist, welcher bei der Bewegung des Gegenelementes relativ zu dem Energieverzehrelement zumindest teilweise nicht-duktil zerfasert wird, und das Gegenelement als ein an seiner dem Energieverzehrelement zugewandten Stirnseite offener Hohlkörper ausgebildet ist derart, dass die bei der Bewegung des Gegenelementes relativ zu dem Energieverzehrelement entstehenden Bruchteile des aus Faserverbundwerkstoff gebildeten Energieverzehrbereiches zumindest teilweise im Inneren des Hohlkörpers aufnehmbar sind. D.h., dass zumindest ein Teil der in die Energieverzehrvorrichtung eingeleiteten Stoßenergie dadurch abgebaut wird, dass der Energieverzehrbereich des Energieverzehrelementes nicht derart plastisch verformt wird, wie es bei herkömmlichen Energieverzehrvorrichtungen der Fall ist, sondern zumindest teilweise in Einzelteile zerlegt wird. Dabei kann die Festigkeit und das Ansprechverhalten der Energieverzehrvorrichtung durch den Anteil der in Stoßkraftübertragungsrichtung verlegten Fasern eingestellt werden.

Faserverbundstrukturen, die für den dynamischen Energieverzehr entwickelt wurden, haben bisher das Problem ein konstantes Kraftniveau mit einer Abweichung von +-5% nach dem Einschwingen des Systems im Arbeitsbereich zu erreichen. Ursache hierfür ist das Bruchverhalten des Faserverbundmaterials, auf welches die Materialstärke einen entscheidenden Einfluss hat.

Allgemein wird für den Aufbau von Faserverbundstrukturen beispielhaft auf nachfolgende Druckschriften verwiesen: DE 103 51 181 A1, DE 195 34 627 A1, DE 10 2009 016 213 A1, DE 10 2012 219 749 A1, DE 698 14 129 T2, EP 2 361 752, WO 2013/132 095 A1, US 4,749,613, EP 2192322 A1 und US2009/0277992A1. Energieverzehrvorrichtungen mit Faserverbundstrukturen sind aus US 6,601,886 B1 bekannt., insbesondere eine Energieverzehrvorrichtung mit den Merkmalen des Oberbegriffs des Anspruchs 1. US 6,601,886 B1 bildet somit den nächstliegenden Stand der Technik für die Gegenstände der Patentansprüche 1 und 13.

Gerade für den Einsatz in schienengebundenen Fahrzeugen ist es jedoch aufgrund der möglichen auftretenden Stoßbelastungen erforderlich, sehr hohe Kräfte bei gleichzeitig geringem Gewicht und Bauraumbedarf der dazu vorgesehenen Vorrichtung abbauen zu können, wobei der erforderliche Materialeinsatz so ökonomisch wie möglich zu gestalten ist.

Der Erfindung liegt daher die Aufgabe zugrunde, einen faserverstärkten Kunststoff für den Einsatz in Energieverzehrvorrichtungen und eine Energieverzehrvorrichtung derart weiterzuentwickeln, dass diese geeignet sind, bei großem Materialquerschnitt auch einen maximalen aber definierten Energieverzehr durch nicht duktile Zerfaserung zu gewährleisten.

Die erfindungsgemäße Lösung ist durch die Merkmale der Ansprüche 1 und 13. charakterisiert. Vorteilhafte Ausbildungen sind in den Unteransprüchen wiedergegeben.

Eine erfindungsgemäß ausgebildete Energieverzehrvorrichtung eines schienengebundenen Fahrzeuges, umfassend zumindest ein Energieverzehrelement in Gestalt eines sich in einer Längsrichtung erstreckenden dreidimensionalen Körpers, wobei das Energieverzehrelement derart ausgelegt ist, bei Überschreiten einer in Längsrichtung des Energieverzehrelementes eingeleiteten kritischen Stoßkraft anzusprechen und zumindest einen Teil der bei der Übertragung der Stoßkraft über das Energieverzehrelement anfallenden Stoßenergie durch nicht duktile Zerfaserung abzubauen, wobei das Energieverzehrelement zumindest teilweise aus einer Energieverzehr-Faserverbundstruktur mit zumindest einer, unidirektional ausgerichtete Endlosfasern aufweisenden und in Matrixmaterial eingebetteten Faserlage besteht, ist dadurch gekennzeichnet, dass die Energieverzehr-Faserverbundstruktur aus zumindest einer ersten, die zumindest eine Faserlage oder mehrere Faserlagen aus unidirektional ausgerichteten Endlosfasern und Matrixmaterial aufweisenden Fasermaterialschicht und zumindest einer zweiten, eine oder mehrere Faserlagen multidirektional ausgerichteter Langfasern und Matrixmaterial aufweisenden Fasermaterialschicht ausgebildet ist, wobei erste und zweite Fasermaterialschichten miteinander verbunden sind, insbesondere vollflächig verbunden sind, und wobei die Endlosfasern parallel oder in einem Winkel von ± 2,5° zur Längsrichtung des Energieverzehrelementes ausgerichtet sind.

Unter einer Faser wird dabei insbesondere ein im Verhältnis zu seiner Länge dünnes, d.h. mit sehr kleinem Querschnitt ausgeführtes flexibles Gebilde verstanden, welches geeignet ist, in Längsrichtung nur Zugkräfte aufzunehmen.

Mit dieser Anordnung können sehr große Kräfte in kleinsten Bereichen lokal abgebaut werden. Die alternierende Anordnung der Faserlagen aus Endlosfasern und Wirrfasern bedingt bei Überschreitung der kritischen Kräfte ein sehr gutes Absorptionsvermögen bei gleichzeitig sehr kleinem Brucheffekt auf die Gesamtgeometrie durch die einzelne Faser.

Die Erfinder haben erkannt, dass das Bruch- und das Zerfaserungsverhalten von Strukturen aus Endlosfasern zum Energieverzehr bei Stoßbelastung erheblich durch das Vorsehen von zwischengeordneten zweiten, Wirrfasern enthaltenden Fasermaterialschichten verbessert werden kann und die Ausbreitung interlaminarer Brüche reduziert werden kann. Die erfindungsgemäße Lösung bietet aufgrund des vorgesehenen Lagenaufbaus aus wechselweise angeordneten Fasermaterialschichten aus Endlosfasern und aufgrund ihrer ungeordneten Anordnung auch als Wirrfasern bezeichneten Langfasern, den Vorteil, ein Delaminieren, d.h. Trennen der Schichten im Grenzbereich zwischen den einzelnen unterschiedlichen Fasermaterialschichten zu verhindern oder zumindest zu reduzieren. Das aus einem Energieverzehr-Faserverbundmaterial bestehende Bauteil zerfasert konstant in kleine Bruchstücke und absorbiert dadurch auf einem horizontalen Kraftniveau +-5% Energie. Das Bruchverhalten des speziellen Lagenaufbaues ist dabei als eine Mischung aus Zwischenfaserbruch und Faserbruch beschreibbar.

Eine einzelne Fasermaterialschicht kann insbesondere aus zumindest einer oder mehreren Faserlagen bestehen, die in ein Matrixmaterial eingebettet sind. Dabei kann das Matrixmaterial zwischen den einzelnen Faserlagen einer Fasermaterialschicht variieren oder aber für alle Faserlagen einer Fasermaterialschicht gleich sein. D.h. die Zusammensetzung sowie physikalischen und chemischen Eigenschaften des Matrixmaterials ist gleich.

Eine einzelne Faserlage ist durch eine Vielzahl von Fasern charakterisiert, deren Anordnung die Art der Faserlage bestimmt, wobei die einzelnen Fasern durch vordefinierte physikalische und/oder chemische Eigenschaften charakterisiert sind.

Unter einer Langfaser im Sinne der Erfindung wird eine Faser mit einer Länge im Bereich von > 1mm bis einschließlich 120mm, vorzugsweise > 10mm bis 120mm verstanden. Eine Endlosfaser ist durch eine Länge > 120mm charakterisiert.

In einer besonders vorteilhaften Ausbildung beträgt der prozentuale Anteil unidirektional ausgerichteter Endlosfasern in der ersten Faserschicht aus der Verbindung einer ersten, die zumindest eine Faserlage oder mehrere Faserlagen aus unidirektional ausgerichteten Endlosfasern und Matrixmaterial aufweisenden Fasermaterialschicht und zumindest einer zweiten, eine oder mehrere Faserlagen multidirektional ausgerichteter Langfasern und Matrixmaterial aufweisenden Fasermaterialschicht im Bereich von 50-80%. Besonders bevorzugt weist die einzelne Faserlage der ersten Fasermaterialschicht 33% +/-8% Fasern auf. Der prozentuale Anteil der Fasern einer mit der ersten Fasermaterialschicht verbundenen zweiten Fasermaterialschicht beträgt dann zwischen 20%-50%.

Der hohe Faseranteil, der sich prozentual in dem Gesamtlaminat aufgrund der Anteile Faser zu Harzmatrix ergibt führt dabei zu einem stetig fortschreitenden Faserbruch. Die Fasern sind nach kurzem Bruchfortschritt wieder gleichwertig gut in der Harzmatrix eigebettet und benötigen wiederum dieselbe Kraft zum erneuten Brechen. Das Verhalten setzt sich bis zum Ende des Verbrauchsweges fort, bis die Energieverzehr-Faserverbundstruktur und damit die Energieverzehrvorrichtung, insbesondere der Crashabsorber vollständig verbraucht wurde oder die eingebrachte Energie nicht mehr ausreicht die Fasern zu brechen, das Fahrzeug also stehenbleibt. Idealerweise ist das Material so steif und der Bruchfortschritt pro Faserbruch so gering, dass das verbrauchte Fasermaterial als Krümel/Staub vorliegt. In den meisten Fällen hat das verbrauchte Fasermaterial zwar keine Festigkeit und Steifigkeit mehr, die Faserschichten halten aber aufgrund der alternierenden Anordnung von Endlos- und Wirrfaserlagen noch durch einzelne Fasern zusammen, somit entstehen währen des Crashablaufes keine Projektile.

In einer vorteilhaften Ausbildung ist eine Mehrzahl von ersten und/oder zweiten Fasermaterialschichten vorgesehen, welche alternierend angeordnet sind, wobei die Endlosfasern innerhalb einer einzelnen ersten Fasermaterialschicht und/oder der einzelnen ersten Fasermaterialschichten zueinander parallel oder in einem Winkel von bis zu ±2,5° von der parallelen Lage abweichend angeordnet sind. Zumindest sind jedoch eine erste und zwei zweite Fasermaterialschicht oder zwei zweite und eine dazwischen angeordnete erste Fasermaterialschicht vorzusehen. Erste und zweite Faserschichten sind vorzugsweise jeweils einfach vernäht oder verstickt, dadurch sind erste und zweite Faserschicht in Dickenrichtung verbunden.

In vorteilhafter Weiterbildung ist das Energieabsorptionsvermögen als Funktion zumindest eines der nachfolgenden Parameter einstellbar:
- bei plattenförmiger Ausbildung der Dicke der Energieverzehr-Faserverbundstruktur;
- bei Ausbildung als Profil der Wandstärke der Energieverzehr Faserverbundstruktur;
- der Dicke der einzelnen ersten und/oder zweiten Fasermaterialschichten;
- die Grammaturen der ersten und/oder zweiten Fasermaterialschicht;
- die Verteilung der Langfasern in der zweiten Fasermaterialschicht;
- die physikalischen Eigenschaften des Fasermaterials in den einzelnen Fasermaterialschichten;
- die physikalischen Eigenschaften (Gleiteigenschaften) des Matrixmaterials
- der Faservolumenanteil im Laminates (Anteil der Fasern im Laminat anhand der eingenommenen Volumen)
- der Fasermassenanteil des Laminates (Anteil der Fasern im Laminat anhand der verschiedenen Komponentengewichte).

Durch die konkrete Wahl der einzelnen Parameter kann die Struktur gezielt an die Anforderungen des Einsatzfalles angepasst werden.

Bezüglich der Ausbildung der einzelnen Fasermaterialschichten besteht eine Vielzahl von Möglichkeiten. Dabei wird vorzugsweise eine einzelne Faserlage einer ersten Fasermaterialschicht von einer Faserlage aus der nachfolgend genannten Gruppe gebildet:
- Gewebe
- Gelege
- Geflecht
- Roving

In besonders vorteilhafter Ausbildung werden aus Gründen einer guten Verarbeitbarkeit als Faserhalbzeuge in Form von Geweben oder Rovings zum Einsatz gelangen.

Vorzugsweise wird das Gewebe von unidirektionalen ersten in Krafteinleitungsrichtung oder in einem Winkel von +-2,5° dazu ausgerichteten Endlosfasern und in einem Winkel von ±45° bis ±135° zu diesen ausgerichteten zweiten Endlosfasern gebildet. Die alternierend um die Geometrie umlaufenden Endlosfasern erhöhen zusätzlich die Energieabsorption, da die Fasern einen umschlossenen Ring um die Geometrie bilden. Dieser Effekt erzeugt an der Bruchkannte über den Geometriequerschnitt eine gleichmäßig verteilte Kräfte.

Die einzelne Faserlage einer zweiten Fasermaterialschicht ist dann vorzugsweise von einer Faserlage aus der nachfolgend genannten Gruppe gebildet:
- Vlies
- Matte

Besonders bevorzugt wird aus dieser Gruppe ein nicht kalandriertes Vlies zum Einsatz gelangen.

In einer vorteilhaften Weiterbildung sind die Langfasern und Endlosfasern zweier benachbart angeordneten Faserlagen der zweiten und ersten Fasermaterialschicht miteinander vernäht oder verstickt. Diese Maßnahme dient auf der einen Seite der Erhöhung der Festigkeit und auf der anderen Seite der Verbesserung des Zerfaserungsverhaltens.

Vorzugsweise ist eine einzelne Endlosfaser einer Faserlage einer ersten Fasermaterialschicht von einer Faser gebildet, ausgewählt aus der nachfolgenden Gruppe:
- Kohlefaser (Vorteil: hohes spezifisches Kraftniveau erreichbar)
- Basaltfaser (Vorteil: kostengünstig)
- Glasfaser (bisher kostengünstigstes Laminat)

In Analogie wird eine einzelne Langfaser einer Faserlage einer zweiten Fasermaterialschicht von einer Faser gebildet, ausgewählt aus der nachfolgenden Gruppe:
- Basaltfaser
- Glasfaser (bisher kostengünstigstes Laminat)

Die einzelne Faserlage der ersten und/oder zweiten Fasermaterialschicht wird dabei in ein Matrixmaterial eingebettet, ausgewählt aus der nachfolgenden Gruppe:
- Polykondensat, insbesondere Phenol
- Polyadditive, insbesondere Epichlorhydrin, Polyol oder Dicarbonsäure
- Polymer
wobei die Faserlagen einer einzelnen Fasermaterialschicht in demselben Matrixmaterial eingebettet sind.

Um den gewünschten Energieverzehr zu erzielen, ist die Formulierung der Kunstharzmatrix durch eine Bruchdehnung von unter 6% und einen E-Modul von über 3000 MPa charakterisiert.

Fasermaterial aus Langfaserabschnitten kann in unterschiedlichsten Grammaturen zum Einsatz gelangen. In Matte/Vlies-Form gebrachte Langfaserabschnitte können durch eine Länge von 1mm bis 120mm, vorzugsweise 10mm bis 120mm charakterisiert sein und werden nicht vorher kardiert.

Um das Energieabsorptionsvermögen und das Zerfaserungsverhalten lokal in Kraftwirkungsrichtung beeinflussen zu können, können die Langfasern einer Faserlage einer zweiten Fasermaterialschicht innerhalb einer einzelnen Faserlage oder zwischen den Faserlagen einer oder mehrerer derartiger zweiter Fasermaterialschichten zumindest hinsichtlich eines Parameters, gewählt aus der nachfolgenden Gruppe, unterschiedlich ausgeführt werden:
- einer materialspezifischen Kenngröße
- einer die Geometrie und/oder Dimensionierung charakterisierenden Kenngröße
- einer physikalische und/oder chemische Eigenschaften beschreibenden Kenngröße.

In einer weiteren vorteilhaften Ausbildung können die Faserlagen einer zweiten Fasermaterialschicht oder die Faserlagen mehrerer zweiter Fasermaterialschichten hinsichtlich zumindest eines Parameters, gewählt aus der nachfolgenden Gruppe, unterschiedlich ausgeführt werden:
- Verteilung der Langfasern in Längs-, Quer- und/oder Höhenrichtung der Faserlage
- Orientierung der Langfasern

Die Ausführung erlaubt es, das Zerfaserungsverhalten bei Krafteinleitung über größere Flächen zu beeinflussen.

Bezüglich der geometrischen Ausführung der Energieverzehr-Faserverbundstruktur besteht eine Mehrzahl von Möglichkeiten. Denkbar sind beispielsweise Ausführungen als ein Bauteil oder eine Kombination aus der nachfolgenden Gruppe:
- Platte
- Rohr
- Profilelement
- Hohlprofilelement
- Schalenelement

In einer besonders vorteilhaften Ausbildung ist die einzelne zweite Fasermaterialschicht derart ausgebildet, dass bei Einleitung einer, eine vordefinierte Größe überschreitenden Kraft, die Energieverzehr-Faserverbundstruktur in einem Winkel von bis zu 60°, vorzugsweise 45° ±15° gegenüber der Krafteinleitungsrichtung zerfasert wird. Über die Wahl des Winkels ist dabei eine Einstellung der Kraft zu Bruchbeginn möglich.

In besonders vorteilhafter Anwendung erfolgt der Einsatz der Energieverzehr-Faserverbundstruktur in einer Stoßsicherung für ein insbesondere schienengebundenes Fahrzeug, da mit der beschriebenen Anordnung große Kräfte in kleinsten Bereichen lokal abbaubar sind. In der Energieverzehrvorrichtung ist das Energieverzehrelement zumindest teilweise, vorzugsweise vollständig aus einer vorbeschriebenen Energieverzehr-Faserverbundstruktur gebildet.

In vorteilhafter Weiterbildung ist das Energieverzehrelement zumindest teilweise, vorzugsweise vollständig als Profilelement ausgeführt, dessen Wandung von der Energieverzehr-Faserverbundstruktur gebildet wird. Dies erlaubt Bauteile mit geringem Gewicht und Materialbedarf bei gleichzeitig großem Kraftabsorptionsvermögen.

Energieverzehrvorrichtungen, insbesondere für den Einsatz in Fahrzeugen umfassen zumindest ein Energieverzehrelement in Gestalt eines sich in einer Längsrichtung, welche in Einbaulage mit der Krafteinleitungsrichtung zusammenfällt, erstreckenden dreidimensionalen Körpers, wobei das Energieverzehrelement derart ausgelegt ist, bei Überschreiten einer in eine Stirnseite des Energieverzehrelementes eingeleiteten kritischen Stoßkraft anzusprechen und zumindest einen Teil der bei der Übertragung der Stoßkraft über das Energieverzehrelement anfallenden Stoßenergie durch nicht duktile Zerfaserung abzubauen. Dabei ist dieses Energieverzehrelement zumindest teilweise, vorzugsweise vollständig aus einer Energieverzehr-Faserverbundstruktur gemäß der vorgenannten Ausführungen gebildet.

Bei Ausbildung der Energieverzehrvorrichtung als Energieabsorber beziehungsweise Stoßsicherung, umfasst diese ein mit dem Energieverzehrelement derart zusammenwirkendes Gegenelement, dass sich bei Überschreiten einer kritischen, in die Energieverzehrvorrichtung eingeleiteten Stoßkraft das Gegenelement und das Energieverzehrelement unter gleichzeitigem Verzehr von zumindest einem Teil der in die Energieverzehrvorrichtung eingeleiteten Stoßenergie relativ zueinander aufeinander zu bewegen, wobei das Energieverzehrelement mindestens einen Energieverzehrbereich aus Faserverbundwerkstoff aufweist, welcher bei der Bewegung des Gegenelementes relativ zu dem Energieverzehrelement zumindest teilweise nicht-duktil zerfasert wird, wobei das Gegenelement als ein an seiner dem Energieverzehrelement zugewandten Stirnseite offener Hohlkörper ausgebildet ist derart, dass die bei der Bewegung des Gegenelementes relativ zu dem Energieverzehrelement entstehenden Bruchteile des aus Faserverbundwerkstoff gebildeten Energieverzehrbereiches zumindest teilweise im Inneren des Hohlkörpers aufnehmbar sind. Das Gegenelement ist in einer vorteilhaften Ausbildung als Kolben und zumindest der dem Gegenelement zugewandte Bereich des Energieverzehrelementes als Zylinder ausgebildet, wobei der dem Energieverzehrelement zugewandte Bereich des Gegenelementes von dem Energieverzehrelement teleskopartig aufgenommen ist derart, dass die Stirnseite des dem Energieverzehrelement zugewandten Bereiches des Gegenelementes an einen Anschlag des Energieverzehrbereiches am Energieverzehrelement anstößt.

Eine besondere Ausgestaltung für ein derartiges Energieverzehrelement für den Einsatz in Schienenfahrzeugen sieht einen Rohrdurchmesser von 150-350mm mit einer Wandstärke von 10-40mm vor, um Kraftniveaus von 200-2500 KN pro Energieverzehrelement zu realisieren.

Die Faserlagen der ersten Fasermaterialschicht werden vorzugsweise von einem Gewebe und die Faserlagen der zweiten Fasermaterialschicht von einer Matte/einem Vlies gebildet. Dabei wird in der Gesamtstruktur der Anteil erster Fasermaterialschichten im Bereich von 33% bis 50 % gewählt, während der Anteil zweiter Fasermaterialschichten im Bereich von 67% bis 50% liegt. Der Vorteil bei dieser Faseranordnung ist die vergleichsweise gleichmäßige Verteilung der Kräfte durch die Wirrfaser.

Ein besonders vorteilhaftes Verfahren zur Herstellung sieht die Verwendung von Kombimatten aus zumindest einem, eine Faserlage der ersten Fasermaterialschicht bildenden Gewebe und zumindest einem, eine Faserlage der zweiten Fasermaterialschicht bildenden Vlies. Dieses kann trocken auf einen Kern gewickelt werden oder vorgetränkt dem Wickelverfahren unterzogen werden.

Die erfindungsgemäße Lösung wird nachfolgend anhand von Figuren erläutert. Darin ist im Einzelnen folgendes dargestellt:
- Figur 1: zeigt in schematisiert vereinfachter Darstellung in einem Axialschnitt beispielhaft eine alternierende Anordnung von ersten und zweiten Fasermaterialschichten aus Verstärkungsfasern und Matrixmanterial;
- Figur 2a: zeigt in einer Draufsicht eine Ausführung einer ersten Fasermaterialschicht;
- Figur 2b: zeigt in einer Draufsicht eine Ausführung einer zweiten Fasermaterialschicht;
- Figur 3a: zeigt eine Ausführung einer Endlosfaser;
- Figur 3b: zeigt eine Bündelung von Endlosfasern in einem Roving;
- Figur 4a: zeigt in einer Ansicht von oben eine Ausführung einer Faserlage aus Endlosfasern in Form eines Gewebes;
- Figur 4b: zeigt in einer Ansicht von oben eine Ausführung einer Faserlage aus Endlosfasern in Form eines Geflechts;
- Figur 5a: zeigt eine Ausführung einer alternierende Anordnung von ersten und zweiten Fasermaterialschichten mit mehrlagigem Aufbau der ersten Fasermaterialschichten;
- Figur 5b: zeigt eine Ausführung einer alternierende Anordnung von ersten und zweiten Fasermaterialschichten mit mehrlagigem Aufbau der zweiten Fasermaterialschichten;
- Figur 5c: zeigt eine Ausführung einer alternierende Anordnung von ersten und zweiten Fasermaterialschichten mit mehrlagigem Aufbau erster und zweiter Fasermaterialschichten;
- Figuren 6a bis 6c: verdeutlichen verschiedene Grundgeometrie für Bauteile aus Energieverzehr-Faserverbundstrukturen;
- Figur 7a: zeigt in einer Perspektivansicht eine Energieverzehrvorrichtung;
- Figur 7b: zeigt einen Axialschnitt gemäß Figur 7a;
- Figur 8: zeigt beispielhaft das Zerfaserungsverhalten des in den Figuren 7a und 7b dargestellten Energieverzehrelementes;
- Figur 9a bis 9c: verdeutlichen Verfahrensabläufe zur Herstellung einer Energieverzehr-Faserverbundstruktur;
- Figur 10a bis 10c: zeigen beispielhaft anhand eines Ausschnittes aus einem Energieverzehrelement Verfahrensabläufe gemäß Figur 9a.

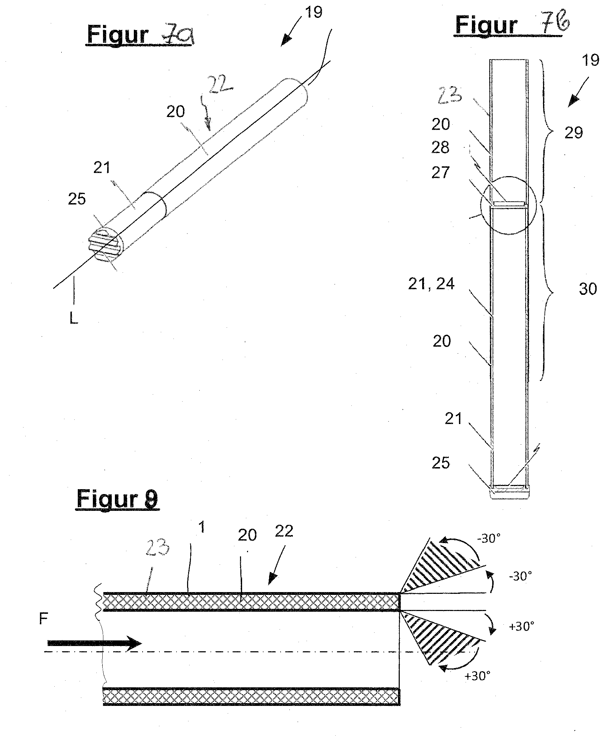

Die Figur 7a zeigt beispielhaft eine erfindungsgemäß ausgeführte Energieverzehrvorrichtung 19 in Perspektivansicht. Figur 7b zeigt eine Schnittansicht. Die Energieverzehrvorrichtung 19 ist insbesondere in Form einer Stoßsicherung, beispielsweise in Form eines Crashpuffers ausgebildet, umfassend zumindest ein Energieverzehrelement 20 in Gestalt eines sich in einer Längsrichtung erstreckenden dreidimensionalen Körpers, wobei das Energieverzehrelement 20 derart ausgelegt ist, bei Überschreiten einer mit Hauptrichtungskomponente in Längsrichtung des Energieverzehrelementes 20 eingeleiteten kritischen Stoßkraft anzusprechen und zumindest einen Teil der bei der Übertragung der Stoßkraft über das Energieverzehrelement 20 anfallenden Stoßenergie durch nicht duktile Zerfaserung abzubauen, wobei das Energieverzehrelement zumindest teilweise aus einer Energieverzehr-Faserverbundstruktur 1 besteht. Diese Energieverzehr-Faserverbundstruktur 1 ist aus zumindest einer ersten, die zumindest eine Faserlage oder mehrere Faserlagen 7.1, 7.2 aus unidirektional ausgerichteten Endlosfasern 4 und Matrixmaterial 6 aufweisenden Fasermaterialschicht 2 und zumindest einer zweiten, eine oder mehrere Faserlagen 8, 8.1, 8.2, 8.3 multidirektional ausgerichteter Langfasern 5 und Matrixmaterial 9 aufweisenden Fasermaterialschicht 3 ausgebildet, wobei erste und zweite Fasermaterialschichten 2, 3 miteinander verbunden sind, wobei die Endlosfasern parallel oder in einem Winkel von ± 2,5° zur Längsrichtung des Energieverzehrelementes ausgerichtet sind.

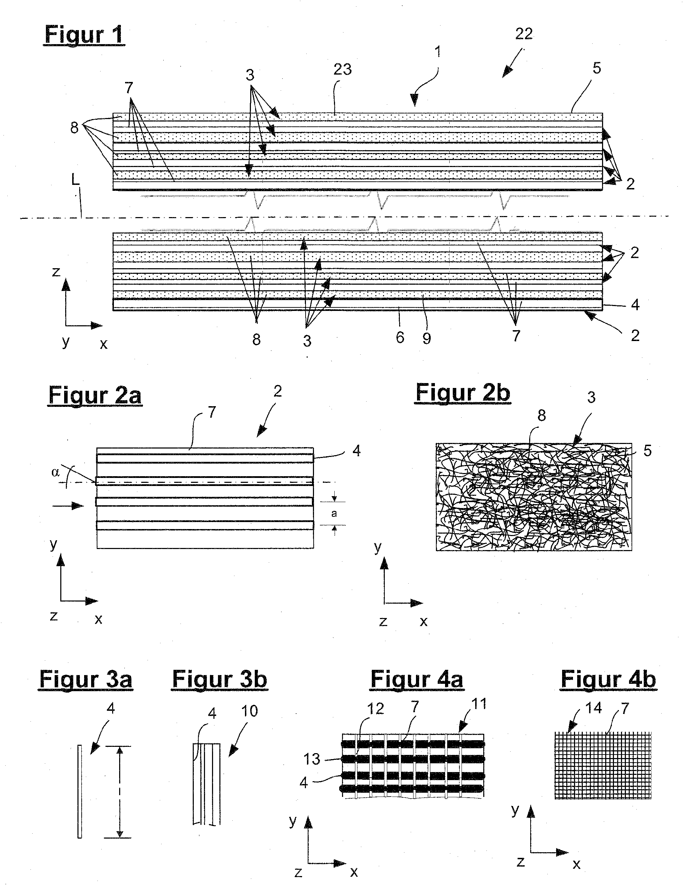

Der Aufbau der Energieverzehr-Faserverbundstruktur 1 ist in den Figuren 1 bis 6 beschrieben.

Die Figur 1 zeigt in schematisiert stark vereinfachter Darstellung den Grundaufbau einer erfindungsgemäß ausgebildeten mehrschichtig aufgebauten und eine dreidimensionale Struktur beschreibenden Energieverzehr-Faserverbundstruktur 1 in einem Axialschnitt durch diese. Der Axialschnitt ist dabei durch eine Schnittebene charakterisiert, die durch die Erstreckung in Längsrichtung und eine Senkrechte zu dieser beschreibbar ist. Zur Verdeutlichung der einzelnen Richtungen ist ein Koordinatensystem angelegt. Die X-Richtung beschreibt die Erstreckung der Energieverzehr-Faserverbundstruktur 1 in Beanspruchungsrichtung auf Zug und Druck, die im dargestellten Fall mit der Längsrichtung zusammenfällt. Die Y-Richtung beschreibt die Erstreckung quer zur Beanspruchungsrichtung und die Z-Richtung die Erstreckung in Höhenrichtung.

Die Energieverzehr-Faserverbundstruktur 1 kann als Vollelement in unterschiedlicher geometrischer Ausbildung, beispielsweise plattenförmiges Element oder zumindest Bestandteil eines Profilelementes unterschiedlichster Ausbildung vorliegen. Im letztgenannten Fall bildet dieses beispielsweise Teile der Wandung 23 der das Profilelement bildenden dreidimensionalen Struktur. Nachfolgende Ausführungen sind daher unabhängig von der von der Energieverzehr-Faserverbundstruktur 1 gebildeten dreidimensionalen Struktur, jedoch besonders vorteilhaft in Wandbereichen von Profilelementen. Beispielhaft zeigt Figur 1 einen Ausschnitt aus einem Wandbereich eines rohrförmigen Elementes 22.

Die Energieverzehr-Faserverbundstruktur 1 ist als Mehrschichtsystem aufgebaut, umfassend zumindest eine oder mehrere erste Fasermaterialschichten 2 und zumindest eine oder mehrere zweite Fasermaterialschichten 3, welche alternierend, d.h. wechselweise angeordnet und miteinander verbunden sind. Dabei sind jeweils zumindest eine erste und zumindest zwei zweite Fasermaterialschichten 2, 3 vorgesehen oder mindestens zwei erste und mindestens eine zweite Fasermaterialschicht 2, 3. Vorzugsweise sind, wie in der Figur 1 wiedergegeben, eine Mehrzahl derartiger erster Fasermaterialschichten 2 und zweiter Fasermaterialschichten 3 vorgesehen.

Die einzelne erste Fasermaterialschicht 2 umfasst eine oder mehrere Faserlagen 7 unidirektional ausgerichteter Endlosfasern 4, die in zumindest ein Matrixmaterial 6 eingebettet sind. Mögliche beispielhafte Ausführungen der Endlosfasern 4 als Monofilamente oder zusammengefasst zu einem Bündel sind in den Figuren 3a und 3b wiedergegeben. Die Ausrichtung der Endlosfasern 4 in der Energieverzehr-Faserverbundstruktur 1 erfolgt in Abhängigkeit einer in Funktionslage der Energieverzehr-Faserverbundstruktur 1 auf diese wirkenden und in dieser durch nicht-duktile Zerfaserung abzubauenden Kraft, insbesondere Druckkraft. Die Längsachse einer einzelnen Endlosfaser 4 ist, wie in Figur 2a in einer Ansicht von oben auf eine Fasermaterialschicht 2 ersichtlich, parallel oder mit einem Winkel α von bis zu einschließlich ± 2,5° zur Kraftrichtung ausgerichtet. Die Abstände a zwischen zwei benachbart angeordneten Endlosfasern 4 quer zur Faserausrichtung können innerhalb einer Faserlage 7 gleich ausgeführt sein oder variieren.

Die einzelne zweite Fasermaterialschicht 3 weist eine oder mehrere Faserlagen 8 von multidirektional, d.h. räumlich in zwei oder drei Richtungen ausgerichtet angeordneten Langfasern 5 auf. Eine derartige Faserlage 8 ist in einer Ansicht von oben in Figur 2b beispielhaft wiedergegeben. Die Langfasern 5 sind durch eine Länge im Bereich von 1mm bis einschließlich 120mm, vorzugsweise 1mm bis 50mm charakterisiert. Diese können als einzelne Monofasern, zu Faserbündeln oder Garnen verarbeitet vorliegen. Die Faserlage 8 ist durch keine bevorzugte Ausrichtung der Langfasern 5 charakterisiert, weshalb diese Fasern auch als Wirrfasern bezeichnet werden.

Die Langfasern 5 sind ebenfalls in ein Matrixmaterial 9 eingebettet, welches in Abhängigkeit des Fertigungsverfahrens zur Erstellung der Energieverzehr-Faserverbundstruktur 1 dem Matrixmaterial 6 der ersten Fasermaterialschicht 2 entspricht.

Durch die wechselweise Anordnung der ersten und zweiten Fasermaterialschichten 2, 3 wird unter Krafteinwirkung in Ausrichtungsrichtung der Endlosfasern 4 eine Zerfaserung der Energieverzehr-Faserverbundstruktur 1 erzielt, die durch den Faserbruch und Zwischenfaserbruch der Langfasern 5 und Endlosfasern 4 charakterisiert ist, da insbesondere die Langfaseranordnung ein Delaminieren der einzelnen Schichten weitestgehend verhindert.

Bezüglich der verwendeten Werkstoffe und Materialien für die einzelnen Faserarten- Endlosfasern 4 und Langfasern 5- besteht eine Mehrzahl von Möglichkeiten. In besonders vorteilhafter Ausführung werden die als Verstärkungsfasern fungierenden Endlosfasern 4 der ersten Fasermaterialschicht 2 und Langfasern 5 der zweiten Fasermaterialschicht 3 von anorganischen Fasern gebildet. Die Faserlage 7 wird aus Endlosfasern in Form von Glasfasern, Kohlefasern oder Basaltfasern gebildet. In Analogie können die für die Langfasern 5 der für die Zerfaserung verantwortlichen Faserlagen 8 der zweiten Fasermaterialschichten 3 von Glasfasern oder Basaltfasern gebildet werden.

Als Matrixmaterial 6 beziehungsweise 9 für die einzelnen Faserlagen 7, 8 finden duroplastische Materialien Verwendung. Diese umfassen jeweils zumindest ein Element aus der nachfolgenden Gruppe
- ein Polykondensat
- ein Polyadditiv
- ein Polymer.

In besonders vorteilhafter Ausbildung werden Matrixmaterialien in Form von Kunstharzen, insbesondere Phenolen auf Aldehydbasis oder Polyadditiven in Form von beispielsweise Epichlorhydrin mit Diolen, Polyol oder Dicarbonsäure eingesetzt. Die Formulierung der Matrix erfolgt derart, dass diese eine Bruchdehnung von unter 6% und mit einem E-Modul von über 3000 MPa, um den gewünschten Energieverzehr zu gewährleisten.

Die Eigenschaften der Faserlage 7 sind insbesondere durch die Anordnung der Endlosfasern 4 zueinander, insbesondere deren Anordnungsdichte quer zur Krafteinwirkungsrichtung, die Geometrie und Dimensionierung sowie die Fasermaterialeigenschaften charakterisiert.

Die Eigenschaften der Faserlage 8 sind als Funktion materialspezifischer Kenngrößen, die Geometrie und/oder Dimensionierung charakterisierender Kenngrößen und/oder physikalischer und/oder chemischer Eigenschaften beschreibender Kenngrößen einstellbar.

Die Figur 2a zeigt beispielhaft in einer Ansicht auf eine Faserlage 7 einer ersten Fasermaterialschicht 2 die unidirektionale Ausrichtung der Endlosfasern 4 parallel zur Krafteinleitungsrichtung in Funktionslage. Die Endlosfasern 4 sind in Erstreckungsrichtung der Faserlage 7 in Breitenrichtung betrachtet gleichmäßig, d.h. mit gleichem Abstand a zueinander angeordnet. Die einzelne Endlosfaser 4 ist vorzugsweise in Erstreckungsrichtung in Längsrichtung frei von einer Querschnittsänderung, d.h. der Querschnitt der Endlosfasern 4 ist vorzugsweise konstant, wobei bezüglich der Geometrie, d.h. Querschnittsform keine Restriktionen bestehen. Vorzugsweise werden jedoch Endlosfasergebilde mit kreisförmigem Querschnitt zum Einsatz gelangen.

Figur 2a zeigt eine besonders vorteilhafte Ausbildung einer Faserlage 7, welche quer zur Krafteinleitungsrichtung gleiche Eigenschaften hinsichtlich der Bruchmechanik gewährleistet.

In einer alternativen Ausbildung besteht die Möglichkeit, dass sich die Endlosfasern 4 einer Faserlage 7 hinsichtlich zumindest eines oder mehrerer Parameter aus der nachfolgenden Gruppe unterscheiden:
- Geometrie, insbesondere Querschnittsgeometrie
- Dimensionierung
- Materialart
- Feinheit

Die Anordnung innerhalb der Faserlage 7 kann quer zur Krafteinwirkungsrichtung gleichmäßig oder aber ungleichmäßig erfolgen. Die als Verstärkungsfasern fungierenden Endlosfasern 4 sind in ein Matrixmaterial 6 eingebettet.

Die Figur 2b zeigt in einer Ansicht von oben auf eine Faserlage 8 die Anordnung und Ausrichtung der Langfasern 5 in einer Faserlage 8 der Fasermaterialschicht 3. Die Anordnung der Langfasern 5 erfolgt frei von der Ausbildung einer Vorzugsrichtung innerhalb der Faserlage 8. Dabei können die Langfasern 5 hinsichtlich wesentlicher Kenngrößen gleich ausgeführt sein.

Auch hier besteht alternativ die Möglichkeit, dass sich die einzelnen Langfasern 5 einer Faserlage 8 hinsichtlich zumindest eines oder mehrerer Parameter aus der nachfolgenden Gruppe unterscheiden:
- Geometrie, insbesondere Querschnittsgeometrie
- Dimensionierung
- Materialart
- Feinheit

Weiteren Einfluss hat die Orientierung und Faserdichte über die einzelnen Erstreckungsrichtungen der Faserlage 8.

Die Figuren 3a und 3b verdeutlichen beispielhaft mögliche Faserlagenausführungen für Endlosfasern 4. Gemäß Figur 3a liegen diese vorzugsweise als Monofilamente vor. Diese sind durch eine wesentlich größere Abmessung I in Längsrichtung als in Breitenrichtung charakterisiert.

Figur 3b zeigt beispielhaft Endlosfasern 4 als Bestandteil von sogenannten Rovings 10. Ein einzelner Roving 10 wird von einem Bündel, Strang oder Multifilamentgarn von im wesentlichen parallel zueinander angeordneter Endlosfasern 4 gebildet. Die Fixierung in der Fasermaterialschicht 2 erfolgt über Matrixmaterial 6. Der einzelne Roving 10 ist durch eine Erstreckung I in Längsrichtung und elliptische oder eckige Querschnitte charakterisiert.

Zu einem Roving 10 sind vorzugsweise Fasern gleicher Eigenschaften zusammengefasst. Denkbar sind jedoch auch Faserbündel aus Endlosfasern 4 unterschiedlicher Eigenschaften.

Die einzelnen Faserlagen 7, 8 der Fasermaterialschichten 2, 3 können in unterschiedlichsten Formen vorliegen. Figur 4a zeigt beispielhaft eine vorteilhafte Ausbildung einer Faserlage 7 als Gewebe 11, welches aus Kettfäden 12 und Schussfäden 13 gebildet wird. Die Figur 4b zeigt beispielhaft die Ausbildung als Geflecht 14.

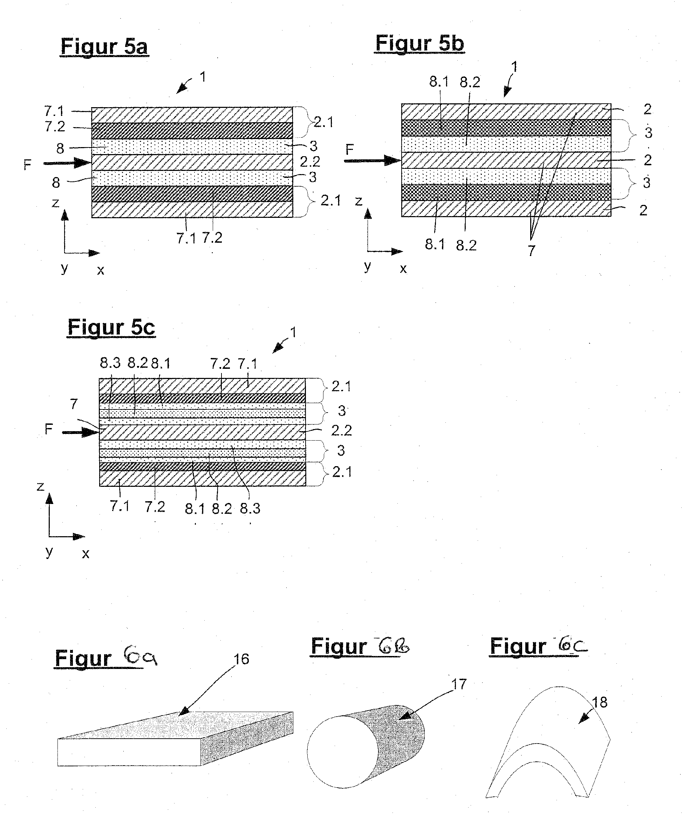

Die Figuren 5a bis 5c verdeutlichen beispielhaft mögliche Fasermaterialschichtanordnungen und Ausführungen, welche die Eigenschaften und Bruchmechanik beeinflussen können.

Figur 5a zeigt beispielhaft eine Ausbildung einer ersten Variante zur Ausbildung erster und zweiter Fasermaterialschichten 2, 3. Es sind drei erste Fasermaterialschichten 2.2 und 2.1 vorgesehen, wobei die beiden Fasermaterialschichten 2.1 aus jeweils zwei Faserlagen 7.1 und 7.2 bestehen, die miteinander verbunden sind. Die Faserlagen 7.1 und 7.2 sind unterschiedlich ausgeführt. Die Fasermaterialschicht 2.1 ist einlagig ausgebildet und umfasst eine Faserlage 7. Die Fasermaterialschichten 3 sind vorzugsweise einlagig ausgeführt und im Wesentlichen gleich aufgebaut.

Die Faserlagen 7.1 und 7.2 der Fasermaterialschicht 2.1 sind aus Endlosfasern 4 und Matrixmaterial 6 aufgebaut, wobei die Faserlagen 7.1 und 7.2 unterschiedlich aufgebaut sind. Diese unterscheiden sich zumindest hinsichtlich eines der nachfolgenden Parameter:
- eine Eigenschaft der Fasern betreffende
- Faserart
- Materialart
- Dimensionierung
- Feinheit
- Geometrie
- Dicke der Faserlage
und/oder in ihrer Anordnung, insbesondere Abstand zueinander.

Demgegenüber verdeutlicht Figur 5b eine Ausführung mit mehrlagigem Aufbau der Fasermaterialschichten 3 aus zwei Faserlagen 8.1, 8.2 und vorzugsweise einlagigen Fasermaterialschichten 2. Letztere bestehen aus den Faserlagen 7. Die Faserlagen 8.1 und 8.2 unterscheiden sich hinsichtlich zumindest einer der nachfolgenden Größen voneinander: eine physikalische oder chemische Eigenschaft der Fasern, Faserart, Materialart, Dimensionierung, Feinheit, Geometrie, Dicke der Faserlage und/oder in ihrer Anordnung, insbesondere Abstand zueinander.

Die Figur 5c zeigt eine Kombination aus Möglichkeiten gemäß den Figuren 5a und 5b, d.h. mit mehrlagigem Aufbau sowohl der ersten und zweiten Fasermaterialschichten 2, 3, wobei hier die zweiten Fasermaterialschichten 3 beispielhaft durch drei Faserlagen 8.1, 8.2, 8.3 und die Fasermaterialschicht 2.1 durch zwei Faserlagen 7.1, 7.2 und die Fasermaterialschicht 2.1 durch eine Faserlage 7 charakterisiert sind.

Bei allen Ausführungen ist die Krafteinleitungsrichtung in Funktionslage eingezeichnet. Die Richtung fällt mit der Ausrichtung der Endlosfasern 4 zusammen, zumindest jedoch die Ausrichtung der Hauptkraftkomponente fällt mit der Ausrichtung der Endlosfasern zusammen.

Die Figuren 6a bis 6c zeigen beispielhaft weiter mögliche Grundgeometrieformen für Bauteile aus Energieverzehr-Faserverbundstrukturen 1. Figur 6a zeigt eine Ausbildung als Platte 16, Figur 6b eine Ausführung als Vollzylinder 17, Figur 6c als schalenförmiges textiles Flächengebilde 18. Eine besonders vorteilhafte Anwendung stellen jedoch Wandungsbereiche beliebig geformter Profilelemente, vorzugsweise in Form von rohrförmigen Elementen dar.

Die Figur 7a zeigt eine besonders vorteilhafte Anwendung einer Energieverzehr-Faserverbundstruktur 1 in einer Energieverzehrvorrichtung 19. Diese umfasst ein Energieverzehrelement 20, welches einstückig aus Faserverbundwerkstoff, insbesondere Energieverzehr-Faserverbundstruktur 1 ausgebildet ist und ein relativ zu dieser bewegbares Gegenelement 21 mit einer Stirnseite 25, über welche die Kraft einleitbar ist. Das Energieverzehrelement 20 ist als sich in einer Längsrichtung L erstreckender Hohlkörper, insbesondere rohrförmiges Element 22 ausgeführt. Die Energieverzehr-Faserverbundstruktur 1 bildet hier eine die Mantelfläche des Hohlkörpers bildende Wand 23. Das Energieverzehrelement 20 ist derart ausgelegt, bei Überschreiten einer in eine Stirnseite des Energieverzehrelementes 20 eingeleiteten kritischen Stoßkraft anzusprechen und zumindest einen Teil der bei der Übertragung der Stoßkraft über das Energieverzehrelement 20 anfallenden Stoßenergie durch nicht duktile Zerfaserung abzubauen. Dazu ist die Energieverzehr-Faserverbundstruktur 1 derart zum Wandungsaufbau des hohlzylindrischen Elementes angeordnet und ausgerichtet, dass die Endlosfasern 4 der Fasermaterialschichten 2 in Längsrichtung des hohlzylindrischen Elementes ausgerichtet sind, so dass deren Lage mit der Wirkrichtung der eingeleiteten Kräfte zusammenfällt.

Figuren 7a und 7b zeigen ein Beispiel einer vorteilhaften Ausbildung einer Energieverzehrvorrichtung 19. Im Einzelnen weist das Energieverzehrelement 20 einen Energieverzehrbereich 29 sowie einen Führungsbereich 30 auf. Am Übergang zwischen dem Energieverzehrbereich 29 und dem Führungsbereich 30 ist hier eine Kante vorgesehen, welche einen Anschlag 27 ausbildet, an den das als Kolben ausgebildete Gegenelement 21 anstößt. Denkbar hierbei ist es, dass die Stirnseite des dem Energieverzehrelement 20 zugewandten Bereiches 24 des als Kolben ausgebildeten Gegenelementes 21 an den Anschlag 27 des Energieverzehrbereiches 29 direkt anstößt. Bei der in Figur 7b dargestellten Ausführungsform der Energieverzehrvorrichtung 19 ist an der Stirnseite des als Kolben ausgebildeten Gegenelementes 21 ein Kegelring 28 vorgesehen, so dass dieser Kegelring 28 an den Anschlag 27 des Energieverzehrbereiches 29 anstößt. Der Kegelring 28 ist dabei fest mit der Stirnseite des Gegenelementes 21 verbunden. Der Führungsbereich 30 des Energieverzehrelementes 20 ist bei der dargestellten Ausführungsform der Energieverzehrvorrichtung 19 als Führungsrohr ausgebildet, dessen Innendurchmesser größer als der Außendurchmesser des als Kolben ausgebildeten Gegenelementes 21 ist. Auf diese Weise kann der dem Energieverzehrelement 20 zugewandte Bereich des Gegenelementes 21 teleskopartig von dem Energieverzehrelement aufgenommen werden. Der Anschlag 27 kann jedoch auch anders, beispielsweise über einen Konus realisiert werden und somit ist eine Verschmelzung von 27 + 28 denkbar.

Die Längsrichtung des Energieverzehrelementes fällt mit dessen Längsachse L zusammen.

Figur 8 zeigt beispielhaft das Verformungsverhalten des Energieverzehrelementes 20 in Form eines rohrförmigen Elementes 22, dessen Wandung 23 aus Energieverzehr-Faserverbundstruktur 1 gebildet wird, bei Einleitung einer Stoßkraft F. Verdeutlicht ist das durch die Wirrfaserlagen bedingte Zerfaserungsverhalten in einem Winkel von bis zu 30° zum Kraftpfad.

Eine besondere Ausgestaltung für ein derartiges Energieverzehrelement 19 für den Einsatz in Schienenfahrzeugen sieht einen Rohrdurchmesser von 150-350mm mit einer Wandstärke von 10-40 mm vor, um Kraftniveaus von 200-2500 KN pro Energieverzehrelement zu realisieren.

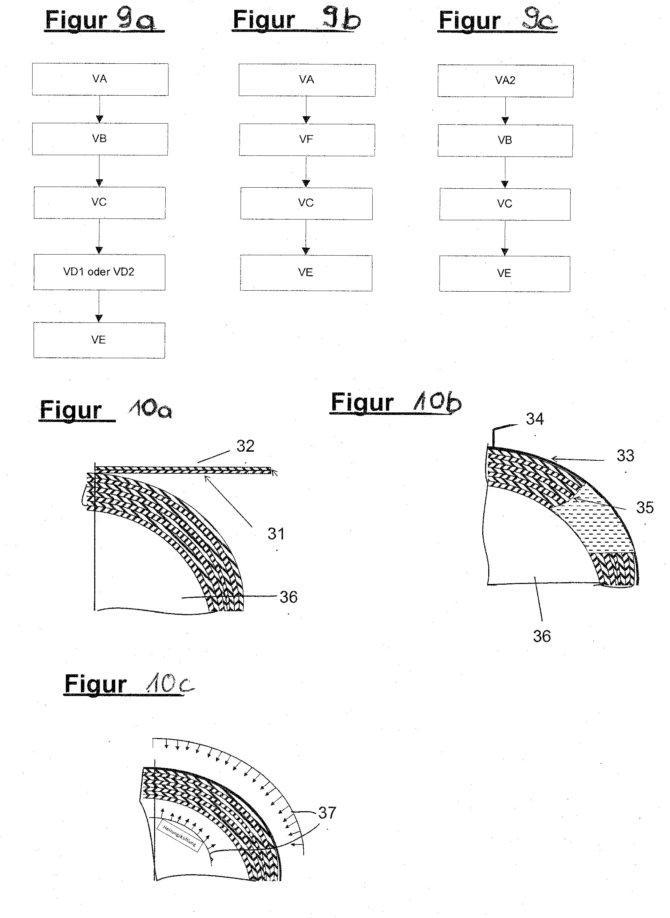

Die Figuren 9a bis 9c verdeutlichen mögliche Verfahren zur Herstellung einer Energieverzehr-Faserverbundstruktur 1, insbesondere zur Ausbildung eines Energieverzehrelementes 20 in Form eines rohrförmigen Elementes 22 durch Wickeln. Die Herstellungsverfahren können dabei in Abhängigkeit der bereitgestellten Faserhalbzeuge variieren. Die einzelnen Faserhalbzeuge beinhalten jeweils zumindest eine oder mehrere Faserlagen. Die Faserhalbzeuge können dabei jeweils für die einzelnen Fasermaterialschichten als separate Faserhalbzeuge vorliegen, die im Fertigungsprozess zueinander in die gewünschte Anordnung verbracht werden, oder die einzelnen Faserlagen der unterschiedlichen Fasermaterialschichten enthaltenen Faserhalbzeuge können bereits zu kombinierten Faserhalbzeugen vorkonfektioniert bezogen werden. Ferner unterscheiden sich die Verfahren hinsichtlich der Art und des Zeitpunktes der Einbringung des Matrixmaterials. Alle Verfahren sind jedoch durch die Bereitstellung der Faserlagen - Verfahrensschritte VA oder VA2 - und dem Einbringen von Matrixmaterial - Verfahrensschritte VD, VF sowie dem Aushärten - VE - charakterisiert.

Grundlegend wird zwischen Trocken- und Nasswickelverfahren unterschieden. Figur 9a verdeutlicht beispielhaft ein Verfahren, bei welchem die Faserlagen enthaltenden Faserhalbzeuge 31, 32 trocken drapiert bzw. gewickelt werden und erst anschließend durch Einbringen und Aushärten von Matrixmaterial in ihrer Lage zueinander fixiert werden.

Ein in der Figur 9a beispielhaft wiedergegebenes erstes Verfahren kann durch nachfolgende Schritte beschrieben werden:
Der Verfahrensschritt VA beinhaltet die Bereitstellung der Faserhalbzeuge 31, 32 in Form von Endlosfasern 4 enthaltenden, ungetränkten Faserhalbzeugen 31 und Langfasern 5 enthaltenden weiteren Faserhalbzeugen 32. Die Endlosfasern 4 enthaltenden Faserhalbzeuge 31 werden in besonders vorteilhafter Ausbildung in Form von Rovings oder Geweben bereitgestellt. Die Langfasern 5 enthaltenden Faserhalbzeuge 32 liegen vorzugsweise in Form von Gelegen, Vliesen oder Matten vor.

Im Verfahrensschritt VB werden die Faserhalbzeuge 31, 32 zueinander ausgerichtet überlappend angeordnet. In vorteilhafter Ausbildung können die einzelnen Faserhalbzeuge 31, 32 an den zueinanderweisenden Seiten miteinander verbunden werden, beispielsweise durch Vernähen oder Versticken der einander benachbart angeordneten Faserlagen der einzelnen Faserhalbzeuge 31, 32. Eine derartige Anordnung der Faserhalbzeuge kann als Kombieinheit im Verfahrensschritt VC um einen Kern gewickelt werden.

Der Verfahrensschritt VD beinhaltet das Einbringen des Matrixmaterials, wobei hier alle Faserlagen 7 und 8 der späteren Fasermaterialschichten 2, 3 mit dem gleichen Matrixmaterial getränkt werden. Das Einbringen des Matrixmaterials erfolgt entweder durch Injektion oder Infusion. Dazu wird der Bereich, insbesondere die im trockenen Zustand um den Kern drapierte Struktur gasdicht umschlossen und das Matrixmaterial, insbesondere der Kunststoff durch Injektion VD1 oder Infusion VD2 in die Faserlagen und zwischen diesen eingebracht. Denkbar ist auch ein Harztränkverfahren.

Im Verfahrensschritt VE erfolgt ein Aushärten, wobei dieser Vorgang durch zusätzliche Maßnahmen, wie Heizung oder Kühlung beinflussbar ist.

Demgegenüber verdeutlichen die Figuren 9b und 9c Ausführungen zum Nasswickeln. Einige Verfahrensschritte erfolgen in Analogie zu denen in Figur 9a beschriebenen, weshalb diese mit gleicher Bezugsziffer benannt sind. Auf die Erläuterungen in Figur 9a zu diesen wird verwiesen.

Auch hier erfolgt Bereitstellung von Faserhalbzeugen 31 und 32 im Verfahrensschritt VA, wobei diese entweder als separate Faserhalbzeuge für die einzelnen Faserlagen der unterschiedlichen Schichten bereitgestellt werden und im nicht dargestellten Verfahrensschritt VB in ihrer Lage zueinander angeordnet werden, um gemeinsam gehändelt zu werden. Im Einzelnen werden die einzelnen Faserhalbzeuge übereinander angeordnet. Denkbar ist es auch, auf ein Faserhalbzeug in Form einer Kombieinheit, insbesondere Kombimatte aus den die unterschiedlichen Fasermaterialschichten bildenden Faserlagen zu nutzen. Die so gebildete Struktur wird in einem Verfahrensschritt VF vor dem Wickeln getränkt, insbesondere durch ein Bad aus Matrixmaterial geführt und in diesem nassen Zustand auf einen Kern im Verfahrensschritt VC gewickelt.
An den Wickelvorgang schließt sich der Verfahrensschritt des Aushärtens und Verfestigens VE an.

Demgegenüber verdeutlicht Figur 9c ein Verfahren, welches bereits vorgetränkte Faserhalbzeuge 31, 32 in VA2 verwendet. Gemäß einer besonders vorteilhaften Ausführung wird als Faserhalbzeug eine Kombimatte aus einem Gewebe aus Endlosfasern und einem Gelege aus Langfasern vorgetränkt mit Matrixmaterial und als derart gebildetes Halbzeug um einen Kern in Schritt VC gewickelt. Das Aushärten erfolgt im Schritt VE.

Die Figur 10a zeigt beispielhaft die Anordnung der die späteren Fasermaterialschichten 2, 3 bildenden und Faserlagen enthaltenden Faserhalbzeuge 31 und 32 in der eine kombinierte Faserhalbzeugstruktur bildenden Ausführung in einem Ausschnitt beim Wickeln um einen Kern 36. Beide Faserhalbzeuge 31, 32 sind derart zueinander angeordnet, dass diese nach Möglichkeit vollflächig aneinander anliegen. Diese werden um den Kern 36 gewickelt.

Je nach Bereitstellung der Faserhalbzeuge 31, 32 erfolgt die Einbettung in Matrixmaterial. Figur 10b stellt beispielhaft für trocken drapierte Faserhalbzeuge 31, 32 die Gegebenheiten für einen Injektions- oder Infusionsprozess dar. Erkennbar ist ein Anschluss 34, der mit einer Einrichtung zur Unterdruckerzeugung koppelbar ist, um die trocken drapierte Anordnung gasdicht abzuschließen. Der sich ausbildende Vakuumsack ist mit 33 bezeichnet. Das Matrixmaterial in Form eines Harz-/Härtergemisches wird beispielsweise mit Hilfe einer Pumpe in den Lagenaufbau eingepresst. Die Harzfließfront ist mit 35 bezeichnet.

Der Prozess des Aushärtens kann durch zusätzliche Maßnahmen beschleunigt werden. So erfolgt beispielsweise eine Erwärmung/Aufheizung, wenn leicht exotherme Harzsysteme zum Einsatz gelangen, während eine Abkühlung bei stark exothermen Harzsystemen angewandt wird. Dazu sind entsprechende Heiz- und/oder Kühleinrichtungen 37 am Innen- und/oder Außenumfang der Wandung zugeordnet, wie in Figur 10c wiedergegeben.

Für die Herstellung von Energieverzehrelementen, wie beispielsweise dem Energieverzehrelement 19 aus den Figuren 7 und 8 wird in besonders vorteilhafter Ausbildung ein Kombihalbzeug aus mehreren Faserlagen in Form einer Kombimatte verwendet. Diese besteht aus zumindest zwei Faserlagen, einem eine Faserlage 7 bildenden Gewebe und einem, eine Faserlage 8 bildenden Vlies. Das Gewebe besteht aus einem 0°/90° Glasgewebe, d.h. unidirektional ausgerichteten Endlosfasern in Form von Glasfasern. Die Faserlage 8 wird von einer Glas-Wirrfaser Vliesmatte gebildet. Dabei sind die Faserlagen übereinander angeordnet und miteinander vorzugsweise vollflächig verbunden, wobei die Verbindung durch vernähen oder versticken erfolgen kann. Die Grammatur dieser Gesamt-Faserhalbzeugstruktur wird vorzugsweise im Bereich zwischen 300g/m² und 900g/m² mit einer Gewichtsaufteilung von 50/50 zwischen 0°/90° Glasfasergewebe und Glas-Wirrfaser Vlies gewählt. Andere vorteilhafte Aufteilungen wären 1/3 0°/90° Glasfasergewebe zu 2/3 Glas-Wirrfaser Vlies.

Die Einbringung der Harzmatrix kann gemäß einem der in den Figuren 9a bis 9c beschriebenen Verfahren erfolgen, ist jedoch nicht auf diese beschränkt.

### Bezugszeichenliste

- 1: Energieverzehr-Faserverbundstruktur
- 2, 2.1, 2.2: erste Fasermaterialschicht
- 3: zweite Fasermaterialschicht
- 4: Endlosfaser
- 5: Langfaser
- 6: Matrixmaterial
- 7, 7.1, 7.2: Faserlage der ersten Fasermaterialschicht
- 8, 8.1, 8.2, 8.3: Faserlage der ersten Fasermaterialschicht
- 9: Matrixmaterial
- 10: Roving
- 11: Gewebe
- 12: Kettfäden
- 13: Schußfäden
- 15: Bereich
- 16: Platte
- 17: Vollzylinder
- 18: schalenförmiges textiles Flächengebilde
- 19: Energieverzehrvorrichtung
- 20: Energieverzehrelement
- 21: Gegenelement
- 22: hohlzylindrisches Element; rohrförmiges Element
- 23: Wand, Wandung
- 24: Bereich
- 25: Stirnseite
- 27: Anschlag
- 28: Kegelring
- 29: Energieverzehrbereich
- 30: Führungsbereich
- 31: Faserhalbzeug
- 32: Faserhalbzeug
- 33: Vakuumsack
- 34: Anschluss
- 35: Harzfließfront
- 36: Kern
- 37: Heiz- und/oder Kühleinrichtung
- L: Längsachse
- VA-VF: Verfahrensschritte

## Patentansprüche

1. Energieverzehrvorrichtung (19) eines schienengebundenen Fahrzeuges, umfassend zumindest ein Energieverzehrelement (20) in Gestalt eines sich in einer Längsrichtung erstreckenden dreidimensionalen Körpers, wobei das Energieverzehrelement (20) derart ausgelegt ist, bei Überschreiten einer mit Hauptrichtungskomponente in Längsrichtung des Energieverzehrelementes (20) eingeleiteten kritischen Stoßkraft anzusprechen und zumindest einen Teil der bei der Übertragung der Stoßkraft über das Energieverzehrelement (20) anfallenden Stoßenergie durch nicht duktile Zerfaserung abzubauen, wobei das Energieverzehrelement zumindest teilweise aus einer Energieverzehr-Faserverbundstruktur mit zumindest einer, unidirektional ausgerichtete Endlosfasern (4) aufweisenden und in Matrixmaterial (6) eingebetteten Faserlage (7) besteht, wobei diese ein mit dem Energieverzehrelement (20) derart zusammenwirkendes Gegenelement (21) umfasst, dass sich bei Überschreiten einer kritischen, in die Energieverzehrvorrichtung (19) eingeleiteten Stoßkraft das Gegenelement (21) und das Energieverzehrelement (20) unter gleichzeitigem Verzehr von zumindest einem Teil der in die Energieverzehrvorrichtung (19) eingeleiteten Stoßenergie relativ zueinander aufeinander zu bewegen, wobei das Gegenelement (21) als ein an seiner dem Energieverzehrelement (20) zugewandten Stirnseite offener Hohlkörper ausgebildet ist derart, dass die bei der Bewegung des Gegenelementes (21) relativ zu dem Energieverzehrelement (20) entstehenden Bruchteile des aus Energieverzehr-Faserverbundwerkstoff gebildeten Bereiches zumindest teilweise im Inneren des Hohlkörpers aufnehmbar sind;
**dadurch gekennzeichnet,**
**dass** die Energieverzehr-Faserverbundstruktur (1) aus zumindest einer ersten, die zumindest eine Faserlage (7) oder mehrere Faserlagen (7.1, 7.2) aus unidirektional in Krafteinleitungsrichtung ausgerichteten Endlosfasern (4) mit einer Länge >120 mm und Matrixmaterial (6) aufweisenden Fasermaterialschicht (2) und zumindest einer zweiten, eine oder mehrere Faserlagen (8, 8.1, 8.2, 8.3) multidirektional ausgerichteter Langfasern (5) mit einer Länge im Bereich von >1mm bis einschließlich 120 mm und Matrixmaterial (9) aufweisenden Fasermaterialschicht (3) ausgebildet ist, wobei erste und zweite Fasermaterialschichten (2, 3) miteinander verbunden sind, wobei die Endlosfasern parallel oder in einem Winkel von ± 2,5° zur Längsrichtung des Energieverzehrelementes ausgerichtet sind und die Langfasern (5) und Endlosfasern (4) zweier benachbart angeordneten Faserlagen (8, 8.1, 8.2, 8.3, 7, 7.1, 7.2) der zweiten und ersten Fasermaterialschicht (3, 2) miteinander vernäht oder verstickt sind.

2. Energieverzehrvorrichtung (19) nach Anspruch 1,
**dadurch gekennzeichnet,**
**dass** der prozentuale Anteil unidirektional ausgerichteter Endlosfasern in der ersten Faserschicht aus der Verbindung einer ersten, die zumindest eine Faserlage (7) oder mehrere Faserlagen (7.1, 7.2) aus unidirektional ausgerichteten Endlosfasern (4) und Matrixmaterial (6) aufweisenden Fasermaterialschicht (2) und zumindest einer zweiten, eine oder mehrere Faserlagen (8, 8.1, 8.2, 8.3) multidirektional ausgerichteter Langfasern (5) und Matrixmaterial (9) aufweisenden Fasermaterialschicht (3) im Bereich von 50-80% liegt.

3. Energieverzehrvorrichtung (19) nach einem der Ansprüche 1 bis 2,
**dadurch gekennzeichnet,**
**dass** das Gegenelement (21) als Kolben und zumindest der dem Gegenelement (21) zugewandte Bereich des Energieverzehrelementes (20) als Profilelement, insbesondere Zylinder ausgebildet ist, dessen Wandung (23) zumindest teilweise von der Energieverzehr-Faserverbundstruktur (1) gebildet ist.
und wobei der dem Energieverzehrelement (20) zugewandte Bereich des Gegenelementes (21) von dem Energieverzehrelement (20) teleskopartig aufgenommen ist derart, dass die Stirnseite des dem Energieverzehrelement (20) zugewandten Bereiches des Gegenelementes (21) an einem Anschlag (27) am Energieverzehrelement (20) anstößt.

4. Energieverzehrvorrichtung (19) nach einem der vorhergehenden Ansprüche,
**dadurch gekennzeichnet,**
**dass** eine einzelne Faserlage (7, 7.1, 7.2) einer ersten Fasermaterialschicht (2, 2.1, 2.2) von einer Faserlage aus der nachfolgend genannten Gruppe gebildet ist:
- Gewebe
- Gelege
- Geflecht
- Roving
und/oder
die einzelne Faserlage (8, 8.1, 8.2, 8.3) einer zweiten Fasermaterialschicht (3) von einer Faserlage aus der nachfolgend genannten Gruppe gebildet ist:
- Gelege
- Multiaxialgelege
- Vlies
- Matte

5. Energieverzehrvorrichtung (19) nach einem der Ansprüche 1 bis 4,
**dadurch gekennzeichnet,**
**dass** die Faserlagen der ersten Fasermaterialschicht der das Energieverzehrelement bildenden Energieverzehr-Faserverbundstruktur von einem Gewebe und die Faserlagen der zweiten Fasermaterialschicht von einem Vlies gebildet werden, wobei das Verhältnis des prozentualen Anteils Gewebe/Vlies an der Gesamtstruktur im Bereich von 33%/67% bis 50%/50% liegt.

6. Energieverzehrvorrichtung (19) nach Anspruch 4 oder 5,
**dadurch gekennzeichnet,**
**dass** das Gewebe von unidirektionalen ersten in Krafteinleitungsrichtung oder in einem Winkel von +-2,5° dazu ausgerichteten Endlosfasern und in einem Winkel von ±45° bis ±135° zu diesen ausgerichteten zweiten Endlosfasern gebildet wird.

7. Energieverzehrvorrichtung (19) nach einem der Ansprüche 1 bis 6,
**dadurch gekennzeichnet,**
**dass** die einzelne zweite Fasermaterialschicht (3) derart ausgebildet ist, dass bei Einleitung einer, eine vordefinierte Größe überschreitenden Kraft, die Energieverzehr-Faserverbundstruktur (1) in einem Winkel von bis zu 60°, vorzugsweise 45° ±15° gegenüber der Krafteinleitungsrichtung zerfasert wird.

8. Energieverzehrvorrichtung (19) nach einem der Ansprüche 1 bis 7,
**dadurch gekennzeichnet,**
**dass** das Energieabsorptionsvermögen als Funktion zumindest einer der nachfolgenden Größen einstellbar ist:
- bei Ausbildung des Energieverzehrelementes als Profil der Wandstärke der Energieverzehr-Faserverbundstruktur (1);
- der Dicke der einzelnen ersten und/oder zweiten Fasermaterialschichten (2, 2.1, 2.2, 3);
- die Grammaturen der ersten und/oder zweiten Fasermaterialschicht (2, 2.1, 2.2, 3);
- die Verteilung der Langfasern (5) in der zweiten Fasermaterialschicht (3);
- die physikalischen Eigenschaften des Fasermaterials in den einzelnen Fasermaterialschichten (2, 2.1, 2.2, 3).
- die physikalischen Eigenschaften (Gleiteigenschaften) des Matrixmaterials
- der Faservolumenanteil im Laminates
- der Fasermassenanteil des Laminates

9. Energieverzehrvorrichtung (19) nach einem der vorhergehenden Ansprüche,
**dadurch gekennzeichnet,**
**dass** eine einzelne Endlosfaser (4) einer Faserlage (7, 7.1, 7.2) einer ersten Fasermaterialschicht (2) von einer Faser gebildet ist, ausgewählt aus der nachfolgenden Gruppe:
- Kohlefaser
- Basaltfaser
- Glasfaser
und/oder
**dass** eine einzelne Langfaser (5) einer Faserlage (8, 8.1, 8.2, 8.3) einer zweiten Fasermaterialschicht (3) von einer Faser gebildet ist, ausgewählt aus der nachfolgenden Gruppe:
- Basaltfaser
- Glasfaser

10. Energieverzehrvorrichtung (19) nach einem der vorhergehenden Ansprüche,
**dadurch gekennzeichnet,**
**dass** die einzelne Faserlage (7, 7.1, 7.2, 8, 8.1, 8.2, 8.3) der ersten und/oder zweiten Fasermaterialschicht (2, 3) in ein Matrixmaterial (6, 9) eingebettet ist, ausgewählt aus der nachfolgenden Gruppe:
- Polykondensat, insbesondere Phenol
- Polyadditiv, insbesondere Epichlorhydrin, Polyol oder Dicarbonsäure
- Polymer
wobei die Faserlagen (7, 7.1, 7.2, 8, 8.1, 8.2, 8.3) einer einzelnen Fasermaterialschicht (2, 3) in gleiches oder unterschiedliches Matrixmaterial (6, 9) eingebettet sind.

11. Energieverzehrvorrichtung (19) nach einem der vorhergehenden Ansprüche,
**dadurch gekennzeichnet,**
**dass** die Formulierung des Matrixmaterials (6, 9) derart ausgeführt ist, dass dieses durch eine Bruchdehnung von unter 6% und einen E-Modul von über 3000 MPa charakterisiert ist.

12. Energieverzehrvorrichtung (19) nach einem der vorhergehenden Ansprüche,
**dadurch gekennzeichnet,**
**dass** die Langfasern (5) einer Faserlage (8, 8.1, 8.2, 8.3) einer zweiten Fasermaterialschicht (3) innerhalb einer einzelnen Faserlage oder zwischen den Faserlagen einer oder mehrerer derartiger zweiter Fasermaterialschichten (3) zumindest hinsichtlich eines Parameters, gewählt aus der nachfolgenden Gruppe, unterschiedlich ausgeführt sind:
- einer materialspezifischen Kenngröße
- einer die Geometrie und/oder Dimensionierung charakterisierenden Kenngröße
- einer physikalische und/oder chemische Eigenschaften beschreibenden Kenngröße
und/oder
**dass** die Faserlagen (7, 7.1, 7.2) einer zweiten Fasermaterialschicht (3) oder die Faserlagen mehrerer zweiter Fasermaterialschichten (3) hinsichtlich zumindest hinsichtlich eines Parameters, gewählt aus der nachfolgenden Gruppe, unterschiedlich ausgeführt sind:
- Verteilung der Langfasern (5) in Längs-, Quer- und/oder Höhenrichtung der Faserlage
- Orientierung der Langfasern (5).

13. Verfahren zur Herstellung eines Energieverzehrelementes (20) in Form eines Profilelementes, insbesondere Rohres
**gekennzeichnet durch folgende Verfahrensschritte:**
a) Bereitstellung von die Faserlagen der unterschiedlichen Fasermaterialschichten enthaltenden Faserhalbzeugen:
b) Drapieren der Faserhalbzeuge
c) Tränken der Faserhalbzeuge mit Matrixmaterial
d) Aushärten der Matrix,
wobei als das Faserlagen enthaltende Faserhalbzeug eine Gesamt-Faserhalbzeugstruktur aus einem Endlosfasern enthaltenden Gewebe und Langfasern enthaltenden Vliesmatte, die vollflächig aneinander anliegen und miteinander verbunden sind, eingesetzt wird und der Verfahrensschritt c) vor dem Verfahrensschritt b) ausgeführt wird.

## Claims

1. Energy-absorption device (19) for a rail vehicle, comprising at least one energy-absorption element (20) in the form of a three-dimensional body extending in a longitudinal direction, where the energy-absorption element (20) is designed to respond when a critical impact force introduced with main directional component in the longitudinal direction of the energy-absorption element (20) is exceeded, and to dissipate, by non-ductile fibrous disintegration, at least a portion of the impact energy arising during the transmission of the impact force through the energy-absorption element (20), where the energy-absorption element consists at least to some extent of an energy-absorbing fibre-composite structure with at least one fibre ply (7) comprising unidirectionally oriented continuous fibres (4) and embedded in matrix material (6), where this fibre ply encompasses a counter-element (21) which acts together with the energy-absorption element (20) in a manner such that, when a critical impact force introduced into the energy-absorption device (19) is exceeded, the counter-element (21) and the energy-absorption element (20) move relatively to one another, towards one another, with simultaneous absorption of at least a portion of the impact energy introduced into the energy-absorption device (19), where the counter-element (21) is configured as a hollow body open at its end face that faces towards the energy-absorption element (20) in a manner such that during the movement of the counter-element relative to the energy-absorption element (20) the interior of the hollow body can at least to some extent receive the resultant fragments of the region composed of energy-absorbing fibre-composite material;
**characterized in that**
the energy-absorbing fibre-composite structure (1) is configured from at least a first fibre material layer (2) comprising matrix material (6) and comprising at least one fibre ply (7) or a plurality of fibre plies (7.1, 7.2) made of continuous fibres (4) with length >120 mm oriented unidirectionally in force-introduction direction, and from at least one second fibre material layer (3) comprising matrix material (9) and comprising one or more fibre plies (8, 8.1, 8.2, 8.3) of multidirectionally oriented long fibres (5) with length in the range from >1 mm up to and including 120 mm, where first and second fibre material layers (2, 3) have been bonded to one another, where the continuous fibres are oriented parallel or at an angle of ± 2.5° to the longitudinal direction of the energy-absorption element and the long fibres (5) and the continuous fibres (4) of two adjacently arranged fibre plies (8, 8.1, 8.2, 8.3, 7, 7.1, 7.2) of the second and first fibre material layer (3, 2) have been stitched or sewn to one another.

2. Energy-absorption device (19) according to Claim 1,
**characterized in that**
the percentage proportion of unidirectionally oriented continuous fibres in the first fibre layer made by combining a first fibre material layer (2) comprising matrix material (6) and comprising at least one fibre ply (7) or a plurality of fibre plies (7.1, 7.2) made of unidirectionally oriented continuous fibres (4), with at least one second fibre material layer (3) comprising matrix material (9) and one or more fibre plies (8, 8.1, 8.2, 8.3) of multidirectionally oriented long fibres (5) is in the range from 50 to 80%.

3. Energy-absorption device (19) according to Claim 1 or 2,
**characterized in that**
the counter-element (21) is configured as piston, and at least that region of the energy-absorption element (20) that faces towards the counter-element (21) is configured as profile element, in particular cylinder whose wall (23) is composed at least to some extent of the energy-absorbing fibre-composite structure (1),
and where the energy-absorption element (20) encompasses, in the manner of a telescope, that region of the counter-element (21) that faces towards the energy-absorption element (20), in a manner such that the end face of that region of the counter-element (21) that faces towards the energy-absorbing element (20) strikes against a stop (27) in the energy-absorption element (20).

4. Energy-absorption device (19) according to any of the preceding claims,
**characterized in that**
an individual fibre ply (7, 7.1, 7.2) of a first fibre material layer (2, 2.1, 2.2) is composed of a fibre ply from the following group:
- woven fabric
- laid scrim
- braided fabric
- roving
and/or
the individual fibre ply (8, 8.1, 8.2, 8.3) of a second fibre material layer (3) is composed of a fibre ply from the following group:
- laid scrim
- multiaxial laid scrim
- nonwoven fabric
- matt.

5. Energy-absorption device (19) according to any of Claims 1 to 4,
**characterized in that**
the fibre plies of the first fibre material layer of the energy-absorbing fibre-composite structure that forms the energy-absorption element are formed from a woven fabric, and the fibre plies of the second fibre material layer are formed from a nonwoven fabric, where the ratio of the percentage proportion of woven fabric/nonwoven fabric in the entire structure is from 33%/67% to 50%/50%.

6. Energy-absorption device (19) according to Claim 4 or 5,
**characterized in that**
the woven fabric is formed from unidirectional first continuous fibres oriented in force-introduction direction or at an angle of ±2.5° thereto and from second continuous fibres oriented at an angle of from ±45° to ±135° to these.

7. Energy-absorption device (19) according to any of Claims 1 to 6,
**characterized in that**
the individual second fibre material layer (3) is configured in a manner such that when a force exceeding a predefined magnitude is introduced, fibrous disintegration of the energy-absorbing fibre-composite structure (1) takes place at an angle, measured against the force-introduction direction, of up to 60°, preferably 45° ±15°.

8. Energy-absorption device (19) according to any of Claims 1 to 7,
**characterized in that**
the energy-absorption capability can be adjusted as a function of at least one of the following variables:
- when the energy-absorption element is configured as profile, the wall thickness of the energy-absorbing fibre-composite structure (1) ;
- the thickness of the individual first and/or second fibre material layers (2, 2.1, 2.2, 3);
- the grammages of the first and/or second fibre material layer (2, 2.1, 2.2, 3);
- the distribution of the long fibres (5) in the second fibre material layer (3);
- the physical properties of the fibre material in the individual fibre material layers (2, 2.1, 2.2, 3) ;
- the physical properties (sliding properties) of the matrix material
- the proportion of fibre by volume in the laminate
- the fibre mass fraction of the laminate.

9. Energy-absorption device (19) according to any of the preceding claims,
**characterized in that**
an individual continuous fibre (4) of a fibre ply (7, 7.1, 7.2) of a first fibre material layer (2) is composed of a fibre selected from the following group:
- carbon fibre
- basalt fibre
- glass fibre
and/or
**in that** an individual long fibre (5) of a fibre ply (8, 8.1, 8.2, 8.3) of a second fibre material layer (3) is composed of a fibre selected from the following group:
- basalt fibre
- glass fibre.

10. Energy-absorption device (19) according to any of the preceding claims,
**characterized in that**
the individual fibre ply (7, 7.1, 7.2, 8, 8.1, 8.2, 8.3) of the first and/or second fibre material layer (2, 3) has been embedded into a matrix material (6, 9) selected from the following group:
- polycondensate, in particular phenolic
- polyadditive, in particular epichlorhydrin, polyol or dicarboxylic acid
- polymer,
where the fibre plies (7, 7.1, 7.2, 8, 8.1, 8.2, 8.3) of an individual fibre material layer (2, 3) have been embedded into identical or different matrix material (6, 9).

11. Energy-absorption device (19) according to any of the preceding claims,
**characterized in that**
the formulation of the matrix material (6, 9) is such that the latter is **characterized by** elongation at break below 6% and modulus of elasticity above 3000 MPa.

12. Energy-absorption device (19) according to any of the preceding claims,
**characterized in that**
the long fibres (5) of a fibre ply (8, 8.1, 8.2, 8.3) of a second fibre material layer (3) within an individual fibre ply or between the fibre plies of one or more such second fibre material layers (3) are different at least in respect of one parameter selected from the following group:
- a material-specific parameter
- a parameter characterizing geometry and/or characterizing dimensions
- a parameter describing physical and/or chemical properties
and/or
**in that** the fibre plies (7, 7.1, 7.2) of a second fibre material layer (3) or the fibre plies of a plurality of second fibre material layers (3) are different in respect of at least one parameter selected from the following group:
- distribution of the long fibres (5) in the longitudinal, transverse and/or thickness direction of the fibre ply
- orientation of the long fibres (5).

13. Process for the production of an energy-absorption element (20) in the form of a profile element, in particular tube
**characterized by** the following steps:
a) provision of semifinished fibre products comprising the fibre plies of the fibre material layers
b) draping of the semifinished fibre products
c) saturation of the semifinished fibre products with matrix material
d) hardening of the matrix,
where the semifinished fibre product used, comprising the fibre plies, is an assembled semifinished fibre structure made of a woven fabric comprising continuous fibres and of nonwoven-fabric mat comprising long fibres, where the entire surfaces of the said woven fabric and of the said mat are in contact with one another and have been bonded to one another, and the step c) is implemented before the step b).

## Revendications

1. Dispositif d'absorption d'énergie (19) d'un véhicule ferroviaire, comprenant au moins un élément d'absorption d'énergie (20) sous la forme d'un corps tridimensionnel s'étendant dans une direction longitudinale, dans lequel l'élément d'absorption d'énergie (20) est conçu de façon à réagir en cas de dépassement d'une force d'impact critique appliquée avec une composante directionnelle principale dans la direction longitudinale de l'élément d'absorption d'énergie (20) et à dégrader au moins une partie de l'énergie d'impact produite lors de la transmission de la force d'impact par l'élément d'absorption d'énergie (20) par un défibrage non ductile, dans lequel l'élément d'absorption d'énergie se compose au moins en partie d'une structure composite fibreuse d'absorption d'énergie avec au moins une couche de fibres (7) présentant des fibres sans fin (4) orientées de façon unidirectionnelle et noyée dans un matériau de matrice (6), dans lequel celle-ci comprend un contre-élément (21) coopérant avec l'élément d'absorption d'énergie (20) de telle manière qu'en cas de dépassement d'une force d'impact critique appliquée au dispositif d'absorption d'énergie (19) le contre-élément (21) et l'élément d'absorption d'énergie (20) se déplacent l'un vers l'autre en absorbant simultanément au moins une partie de l'énergie d'impact appliquée au dispositif d'absorption d'énergie (19), dans lequel le contre-élément (21) est réalisé sous la forme d'un corps creux ouvert sur son côté frontal tourné vers l'élément d'absorption d'énergie (20), de telle manière que les fragments de la région formée du matériau composite fibreux d'absorption d'énergie produits lors du mouvement du contre-élément (21) par rapport à l'élément d'absorption d'énergie (20) puissent être repris au moins en partie à l'intérieur du corps creux; **caractérisé en ce que** la structure composite fibreuse d'absorption d'énergie (1) est formée d'au moins une première couche de matière fibreuse (2) présentant une couche de fibres (7) ou plusieurs couches de fibres (7.1, 7.2) de fibres sans fin (4) orientées de façon unidirectionnelle dans la direction d'application de la force avec une longueur > 120 mm et un matériau de matrice (6) et d'au moins une deuxième couche de matière fibreuse (3) présentant une ou plusieurs couche(s) de fibres (8, 8.1, 8.2, 8.3) de fibres longues (5) orientées de façon multidirectionnelle avec une longueur dans la plage de > 1 mm jusque et y compris 120 mm et un matériau de matrice (9), dans lequel les première et deuxième couches de matière fibreuse (2, 3) sont assemblées l'une à l'autre, dans lequel les fibres sans fin sont orientées parallèlement ou avec un angle de ± 2,5° par rapport à la direction longitudinale de l'élément d'absorption d'énergie et les fibres longues (5) et les fibres sans fin (4) de deux couches de fibres voisines (8, 8.1, 8.2, 8.3, 7, 7.1, 7.2) des deuxième et première couches de fibres (3, 2) sont cousues ou brodées les unes aux autres.

2. Dispositif d'absorption d'énergie (19) selon la revendication 1, **caractérisé en ce que** le pourcentage des fibres sans fin orientées de façon unidirectionnelle dans la première couche de fibres résultant de l'assemblage d'une première couche de matière fibreuse (2) présentant au moins une couche de fibres (7) ou plusieurs couches de fibres (7.1, 7.2) de fibres sans fin (4) orientées de façon unidirectionnelle et un matériau de matrice (6) et d'une deuxième couche de matière fibreuse (3) présentant une ou plusieurs couche(s) de fibres (8, 8.1, 8.2, 8.3) de fibres longues (5) orientées de façon multidirectionnelle et un matériau de matrice (9) se situe dans la plage de 50 à 80 %.

3. Dispositif d'absorption d'énergie (19) selon une des revendications 1 à 2, **caractérisé en ce que** le contre-élément (21) est formé par un piston et au moins la région de l'élément d'absorption d'énergie (20) tournée vers le contre-élément (21) est formée par un élément profilé, en particulier un cylindre, dont la paroi (23) est formée au moins en partie par la structure composite fibreuse d'absorption d'énergie (1), et dans lequel la région du contre-élément (21) tournée vers l'élément d'absorption d'énergie (20) est logée sous forme télescopique dans l'élément d'absorption d'énergie (20), de telle manière que le côté frontal de la région du contre-élément (21) tournée vers l'élément d'absorption d'énergie (20) bute contre une butée (27) sur l'élément d'absorption d'énergie (20).

4. Dispositif d'absorption d'énergie (19) selon l'une quelconque des revendications précédentes, **caractérisé en ce qu'**une couche de fibres individuelle (7, 7.1, 7.2) d'une première couche de matière fibreuse (2, 2.1, 2.2) est formée par une couche de fibres du groupe mentionné ci-dessous:
- tissu
- non tissé
- treillis
- stratifil
et/ou la couche de fibres individuelle (8, 8.1, 8.2, 8.3) d'une deuxième couche de matière fibreuse (3) est formée par une couche de fibres du groupe mentionné ci-dessous:
- non tissé
- non tissé multiaxial
- natte
- nappe.

5. Dispositif d'absorption d'énergie (19) selon l'une quelconque des revendications 1 à 4, **caractérisé en ce que** les couches de fibres de la première couche de matière fibreuse de la structure composite fibreuse d'absorption d'énergie formant l'élément d'absorption d'énergie sont formées par un tissu et les couches de fibres de la deuxième couche de matière fibreuse sont formées par une natte, dans lequel le rapport du pourcentage tissu/natte sur la structure totale se situe dans la plage de 33 %/67 % à 50 %/50 %.

6. Dispositif d'absorption d'énergie (19) selon la revendication 4 ou 5, **caractérisé en ce que** le tissu est formé de premières fibres sans fin unidirectionnelles dans la direction d'application de la force ou orientées d'un angle de ± 2,5° par rapport à celle-ci et de deuxièmes fibres sans fin orientées d'un angle de ± 45° à ± 135° par rapport à celle-ci.

7. Dispositif d'absorption d'énergie (19) selon l'une quelconque des revendications 1 à 6, **caractérisé en ce que** la deuxième couche individuelle de matière fibreuse (3) est réalisée de telle manière que, lors de l'application d'une force dépassant une grandeur prédéfinie, la structure composite fibreuse d'absorption d'énergie (1) soit défibrée sous un angle jusque 60°, de préférence de 45°±15° par rapport à la direction d'application de la force.

8. Dispositif d'absorption d'énergie (19) selon l'une quelconque des revendications 1 à 7, **caractérisé en ce que** la capacité d'absorption d'énergie est réglable en fonction d'au moins une des grandeurs suivantes:
- lors de la formation de l'élément d'absorption d'énergie sous forme de profilé: l'épaisseur de paroi de la structure composite fibreuse d'absorption d'énergie (1);
- l'épaisseur des première et deuxième couches de matière fibreuse individuelles (2, 2.1, 2.2, 3);
- les grammages des première et deuxième couches de matière fibreuse (2, 2.1, 2.2, 3);
- la répartition des fibres longues (5) dans la deuxième couche de matière fibreuse (3);
- les propriétés physiques de la matière fibreuse dans les couches de matière fibreuse individuelles (2, 2.1, 2.2, 3);
- les propriétés physiques (propriétés de glissement) du matériau de matrice;
- la fraction en volume de fibres dans le stratifié;
- la fraction en masse de fibres dans le stratifié.

9. Dispositif d'absorption d'énergie (19) selon l'une quelconque des revendications précédentes, **caractérisé en ce qu'**une fibre sans fin individuelle (4) d'une couche de fibres (7, 7.1, 7.2) d'une première couche de matière fibreuse (2) est formée d'une fibre choisie dans le groupe suivant:
- fibre de carbone
- fibre de basalte
- fibre de verre
et/ou **en ce qu'**une fibre longue individuelle (5) d'une couche de fibres (8, 8.1, 8.2, 8.3) d'une deuxième couche de matière fibreuse (3) est formée d'une fibre choisie dans le groupe suivant:
- fibre de basalte
- fibre de verre.

10. Dispositif d'absorption d'énergie (19) selon l'une quelconque des revendications précédentes, **caractérisé en ce que** la couche de fibres individuelle (7, 7.1, 7.2, 8, 8.1, 8.2, 8.3) de la première et/ou de la deuxième couche de matière fibreuse (2, 3) est noyée dans un matériau de matrice (6, 9), choisi dans le groupe suivant:
- polycondensat, en particulier phénol
- polyadditif, en particulier épichlorhydrine, polyol ou acide dicarboxylique
- polymère
dans lequel les couches de fibres (7, 7.1, 7.2, 8, 8.1, 8.2, 8.3) d'une couche de matière fibreuse individuelle (2, 3) sont noyées dans un matériau de matrice identique ou différent (6, 9).

11. Dispositif d'absorption d'énergie (19) selon l'une quelconque des revendications précédentes, **caractérisé en ce que** la formulation du matériau de matrice (6, 9) est effectuée de telle manière que celui-ci soit **caractérisé par** un allongement de rupture de moins de 6 % et par un module E de plus de 3000 MPa.

12. Dispositif d'absorption d'énergie (19) selon l'une quelconque des revendications précédentes, **caractérisé en ce que** les fibres longues (5) d'une couche de fibres (8, 8.1, 8.2, 8.3) d'une deuxième couche de matière fibreuse (3) à l'intérieur d'une couche de fibres individuelle ou entre les couches de fibres d'une ou de plusieurs de ces deuxièmes couches de matière fibreuse (3) sont réalisées différemment, au moins en ce qui concerne un paramètre, choisi dans le groupe suivant:
- une caractéristique spécifique du matériau
- une caractéristique caractérisant la géométrie et/ou le dimensionnement
- une caractéristique décrivant des propriétés physiques et/ou chimiques
et/ou **en ce que** les couches de fibres (7, 7.1, 7.2) d'une deuxième couche de matière fibreuse (3) ou les couches de fibres de plusieurs deuxièmes couches de matière fibreuse (3) sont réalisées différemment en ce qui concerne au moins un paramètre, choisi dans le groupe suivant:
- répartition des fibres longues (5) en direction longitudinale, transversale et/ou en hauteur de la couche de fibres
- orientation des fibres longues (5).

13. Procédé de fabrication d'un élément d'absorption d'énergie (20) sous la forme d'un élément profilé, en particulier d'un tube, **caractérisé par** les étapes suivantes:
a) préparation des demi-produits fibreux contenant les couches de fibres des différentes couches de matière fibreuse:
b) drapage des demi-produits fibreux
c) imprégnation des demi-produits fibreux avec le matériau de matrice
d) durcissement de la matrice,
dans lequel on utilise comme demi-produit fibreux contenant les couches de fibres une structure de demi-produit fibreux totale en un tissu contenant des fibres sans fin et une nappe non tissée contenant des fibres longues, qui sont appliquées en pleine surface l'une sur l'autre et qui sont assemblées l'une à l'autre et on exécute l'étape c) avant l'étape b).
